# EUROPEAN PATENT APPLICATION

(11) **EP 1 251 332 A1**
(43) Date of publication of application: **23.10.2002**
(21) Application number: 01999787.3
(22) Date of filing: 07.12.2001
(51) Int. Cl.: G01C 21/00, G08G 1/137, G09B 29/00

(54) **POSITION INFORMATION IDENTIFIER PROVIDING SYSTEM, AND POSITION INFORMATION IDENTIFIER TRANSMITTING METHOD AND DEVICE**

(30) Priority: 08.12.2000 JP 2000375321
(71) Applicant: MATSUSHITA ELECTRIC INDUSTRIAL CO., LTD., Kadoma-shi, Osaka 571-0050 (JP)
(72) Inventor: ADACHI, Shinya, Yokohama-shi, Kanagawa 227-0038 (JP)
(74) Representative: Balsters, Robert
(86) International application number: JP0110749
(87) International publication number: WO02046698

(57) **Abstract**

This invention provides a system for aiding information providing services utilizing position information identifiers, which is a position information identifier providing system including information providing means (20) for providing to a receiving device (30) containing a database (37) of position information identifiers and a database (38) of a digital map, only the information using said position information identifiers; and position information identifier information providing means (10) for providing only updated position information identifier information to said receiving device, in addition to said information providing means. The system is capable of supplementarily supporting a scheme of providing information by using the position information identifier. The burden imposed on the map data manufacturer, such as the maintenance and after-sales service, which result from the updating of the position information identifier, is lightened. Further, there is no need of transmitting the new and old position information identifiers redundantly to the VICS information.

## Description

### <Technical Field>

The present invention relates to a system for providing updating information of a position information identifier, which defines a road position, to an on-board device or the like, a method for transmitting the position information identifier in that case, and a device for executing the method. More particularly, the invention aids a system for providing traffic information by using the position information identifier.

### <Background of the Invention>

Recently, the vehicle carrying thereon an on-board navigation device rapidly increases its number. The on-board navigation device contains digital map database, and receives information by a VICS (vehicle information communication system) , which provides traffic congestion information or traffic accident information, through media such as FM multiplex broadcasting, or radio or optical beacon, displays a congested or accident position on a map, and adds those pieces of information to the condition and executes a route search process based on the condition.

The digital map database is currently prepared by several companies in Japan. The map data contains errors as the fatality of the scale map. Those errors contained in the map data are different for each company.

In the transmission of traffic information, e.g., the position of a traffic accident on the on-board navigation device, if the longitude and latitude data representative of that position is solely presented, the on-board navigation device mistakenly recognizes a position on a different road as the accident position, depending on some types of the digital map database contained therein.

To avoid such an unexactness of the information transmission, in the VICS information, road positions are designated by using position information identifiers, such as node numbers assigned to nodes, e.g., intersections, link numbers assigned to the links each between adjacent nodes or the like. In the digital map database of every company, the intersections and roads are stored in association with node numbers and link numbers. Accordingly, each road position described in terms of the VICS information may uniquely be specified.

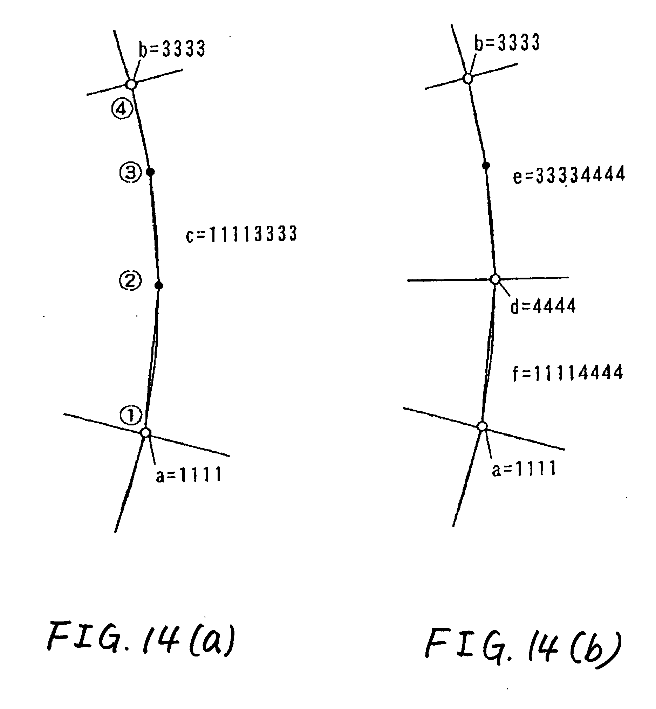

The position information identifier is defined according to predetermined rules. As shown in Fig. 14(a), each node has a node number, which is uniquely assigned to and indicates the node. A link number of a road "c" located between a node "a" (node number = 1111) and another node "b" (node number = 3333) is assigned "11113333" in which the large node number "3333" follows the small node number "1111". A curve of the road is approximated by a polygonal line, apexes of the polygonal line are set as interpolating points, the node "a" of the small node number is designated as an interpolating point (1), and the node "b" is designated as the final interpolating point, and the interpolating points located between the nodes "a" and "b" are sequentially numbered.

As shown in Fig. 14(b), in a case where a new road is constructed and another node "d" (node number = 4444) is provided anew, the old link number "11113333" is substituted by a new line number 11114444 assigned to a link "f" between the nodes "a" and "d", and another new link number "33334444" assigned to a link "e" between the nodes "d" and "b".

Updating information of the position information identifier is recorded into a recording medium, and distributed to the related map data manufacturing companies, from a distribution source. Each company modifies the company's map data on the basis of the updated position information identifier. Some companies accept a customer's request of modifying the map data as the after-sales service to the map data sold.

In the VICS information, even after the position information identifier is updated, traffic information containing both the position information identifier after updated and the position information identifier before updated is provided for a predetermined period of time, while taking the on-board navigation devices containing the digital map data before updated into consideration.

Road construction and alteration will be carried out continuously in the future, and the position information identifier will be updated repeatedly. Accordingly, the money as invested into the maintenance and after-sales service by the map data manufacturers, is extremely large.

In the VICS information, it is necessary to send the new and old position information identifiers redundantly. Therefore, to maintain the information providing system, which utilizes the position information identifiers, much cost is taken in various forms, such as economic burden to prepare its data, and data transmission inefficiency.

Accordingly, an object of the present invention is to provide a system for aiding the information providing service utilizing the position information identifiers, and a method and apparatus for transmitting position information identifiers in that system.

### <DISCLOSURE OF THE INVENTION>

According to one aspect of the invention, there is provided a position information identifier providing system, which includes:
1) information providing means for providing to a receiving device containing a database of position information identifiers and a database of a digital map, only the information using said position information identifiers; and
2) position information identifier information providing means for providing only updated position information identifier information to said receiving device, in addition to said information providing means.

According to another aspect of the invention, there is provided a method for transmitting to a receiving device containing a database of position information identifiers and a database of a digital map, information on said position information identifier as updated,
wherein
1) information on said position information identifier and coordinate row information of nodes and interpolating points, both constituting said position information identifier, is transmitted to said receiving device, and
2) said receiving device executes a map matching process to determine a position on said digital map, which corresponds to said position information identifier.

According to still another aspect, there is provided a position information identifier transmitter for generating and transmitting position information identifier transmitting information containing information on a position information identifier and coordinate row information of nodes and interpolating points, both constituting said position information identifier.

According to still another aspect of the invention, there is provided a receiving device which contains a database on a position information identifier and a database on a digital map, and receives information using said position information identifier and displays a position on a digital map, which corresponds to said position information identifier, the improvement being characterized in that
1) said receiving device receives information of an updated position information identifier and position information identifier transmitting information containing information on a position information identifier and coordinate row information of nodes and interpolating points, both constituting said position information identifier,
2) said receiving device stores said position information identifier into said position information identifier database, and
3) said receiving device carries out a map matching process by using said coordinate row information to thereby determine a position of said position information identifier on a digital map.

The system of the invention is capable of supplementarily supporting a scheme of providing information by using the position information identifier. The burden imposed on the map data manufacturer, such as the maintenance and after-sales service, which result from the updating of the position information identifier, is lightened. Further, there is no need of transmitting the new and old position information identifiers redundantly to the VICS information.

Where the position information identifier transmitting method of the invention is employed, if different digital map data is used, the receiving side device reliably makes the correspondence between the position information identifier and the position on the digital map.

### <BRIEF DESCRIPTION OF THE DRAWINGS>

Fig. 1 is a block diagram showing an arrangement of a position information identifier providing system, which is an embodiment of the present invention,
Fig. 2 is a diagram showing a data configuration of position information identifier information provided in the embodiment system,

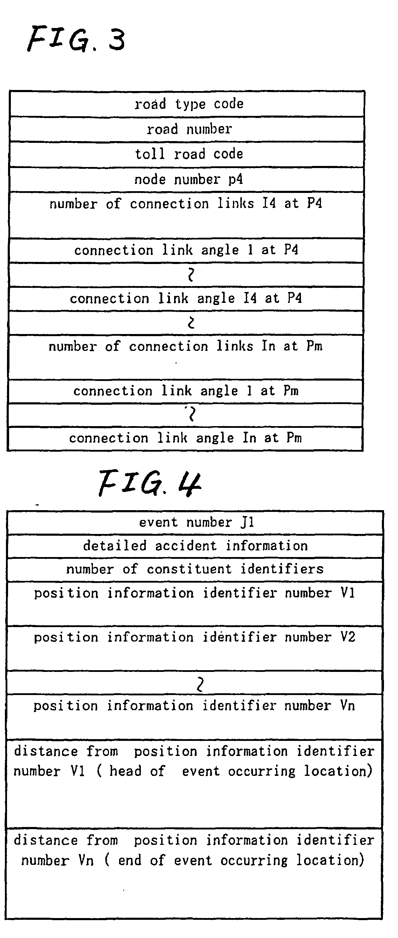

Fig. 3 is a diagram showing a data configuration of supplementary information provided in the embodiment system,
Fig. 4 is a diagram showing a data configuration of accident information, which is provided as traffic information in the embodiment system,
Fig. 5 is a diagram showing a data configuration of traffic congestion information, which is provided as traffic information in the embodiment system,
Fig. 6 is a flow chart showing operations at respective portions in the embodiment system,
Fig. 7 is a diagram showing a first application of the embodiment system,
Fig. 8 is a diagram showing a second application of the embodiment system,
Fig. 9 is a diagram showing a third application of the embodiment system,
Fig. 10 is a diagram showing a position information identifier in the embodiment system,
Fig. 11 is a diagram showing another position information identifier in the embodiment system,
Fig. 12 is a diagram showing yet another position information identifier in the embodiment system,
Fig. 13 is a diagram showing an application other than the transmission of the updated position information identifier in the embodiment system, and
Figs. 14(a) and 14(b) are diagrams for explaining the updating of the position information identifier.

### <BEST MODES FOR CARRYING OUT THE INVENTION>

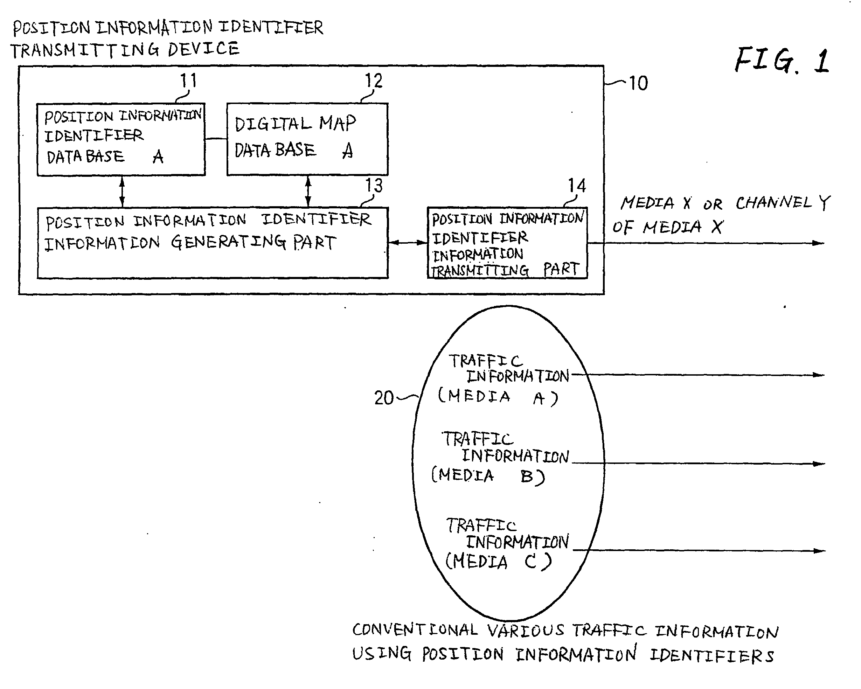

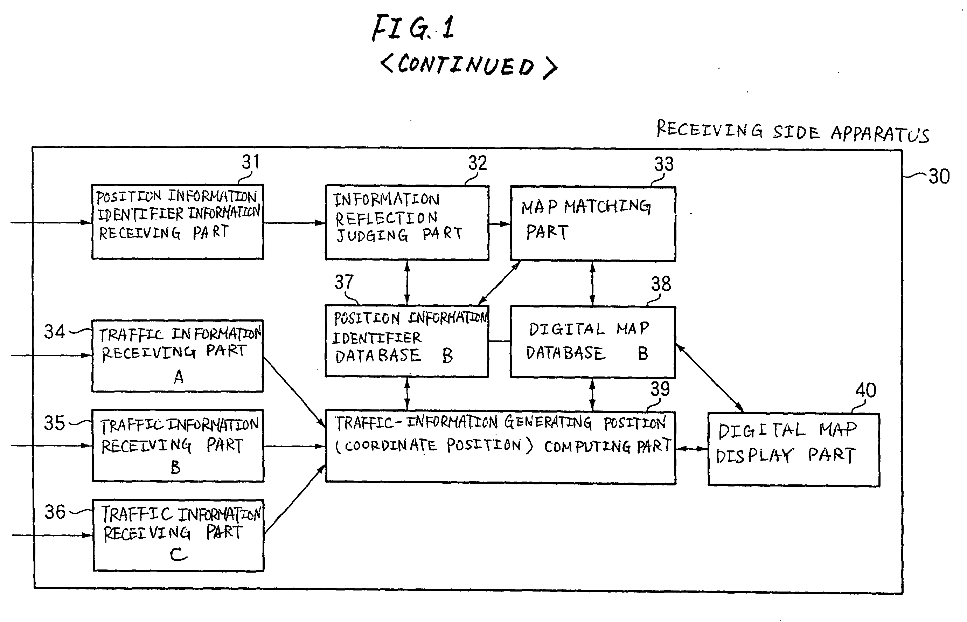

A system of an embodiment according to the invention, as shown in Fig. 1, is made up of media 20 for providing various pieces of traffic information by using position information identifiers, a position information identifier transmitting device 10 for providing information of the position information identifiers per se, and a receiving side device 30 which receives traffic information from the media 20 and receives position information identifier information from the position information identifier transmitting device 10.

The position information identifier transmitting device 10 includes a new position information identifier database A 11, a digital map database A 12, a position information identifier transmitting information generating part 13 for generating transmitting information of position information identifiers, and a position information identifier information transmitting part 14 for transmitting generated information of position information identifiers.

The receiving side device 30 includes a position information identifier database B 37, a digital map database B 38, a position information identifier information receiving part 31 which receives position information identifier information from the position information identifier transmitting device 10, an information reflection judging part 32 which judges the position information identifiers and selects those position information identifiers needed by the receiver unit, a map matching part 33 which executes a map matching process to determine a position of the position information identifier on the digital map, traffic information receiving parts 34, 35 and 36 for receiving traffic information from media, a traffic-information generating position computing part 39 which computes a position where an event, such as traffic accident or traffic congestion, occurs, from the information received, and a digital map display part 40 which displays the position where the event occurs.

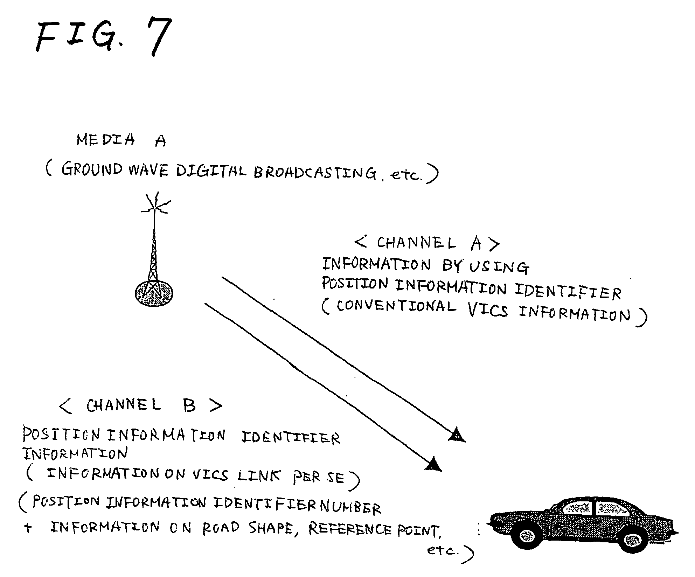

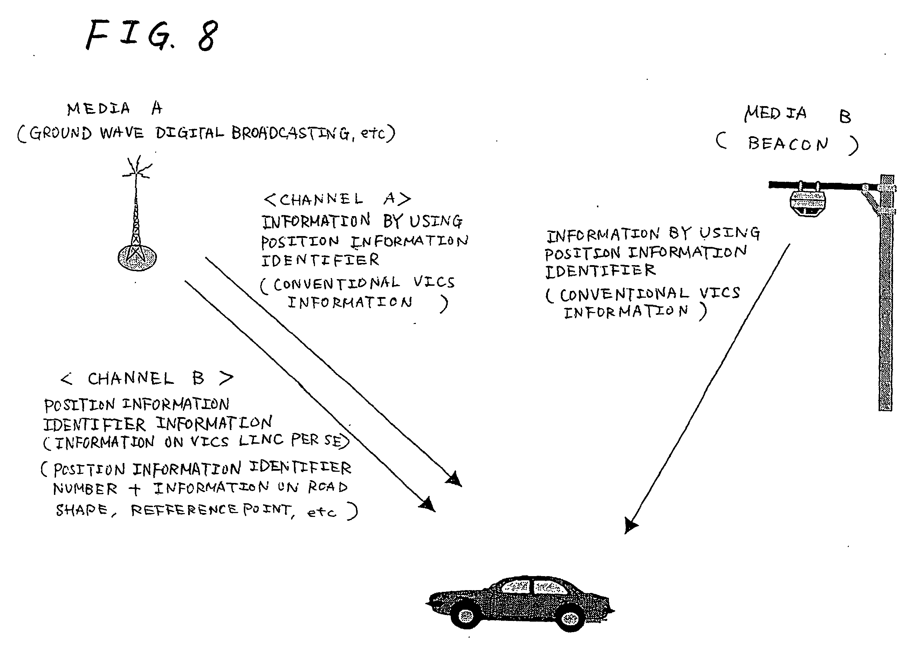

The receiving side device 30 is mounted on a vehicle. Traffic information are provided by media, such as a traffic information providing channel (channel A) of ground wave digital broadcasting as shown in Fig. 7 and a beacon as shown in Fig. 8. Information on the position information identifier is provided by a position information identifier information providing channel (channel B) of the ground wave digital broadcasting, for example.

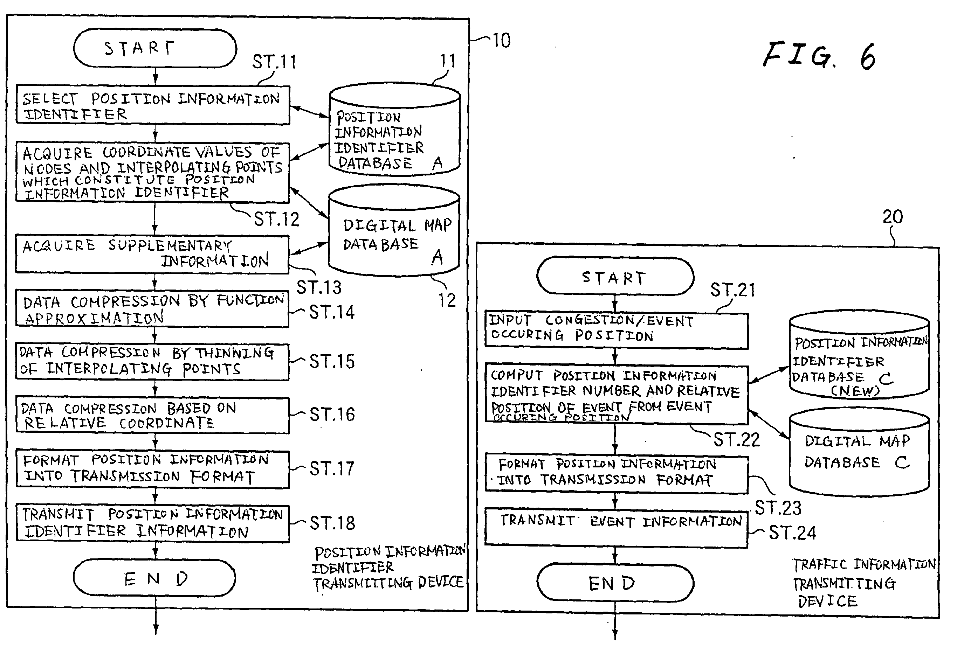

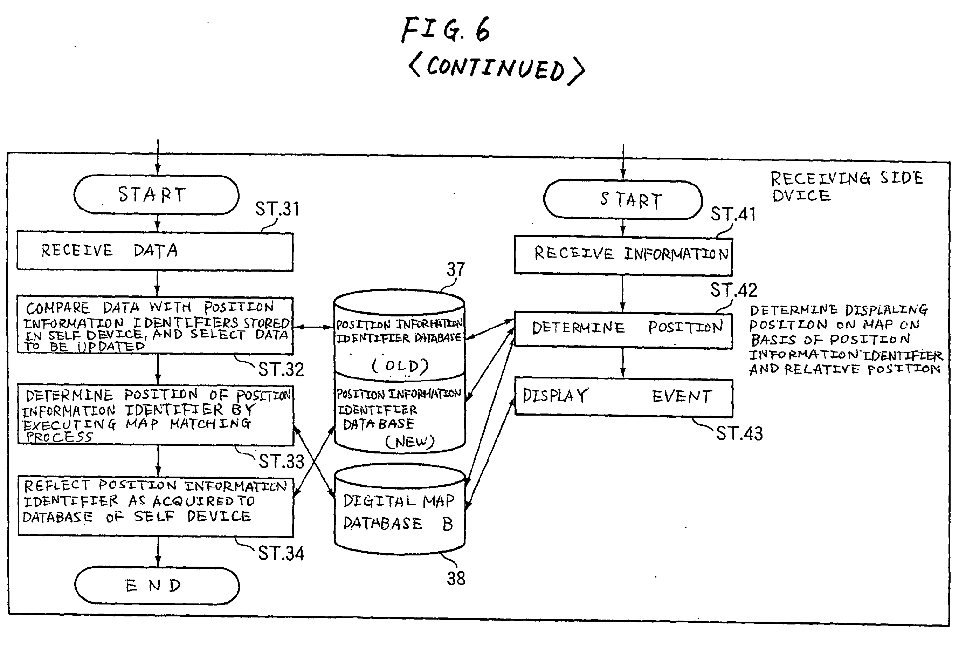

Fig. 6 shows operating procedures of the position information identifier transmitting device 10, the traffic information transmitting device 20 and the receiving side device 30.

The following operation is performed in the position information identifier transmitting device 10.

Step 11: The position information identifier transmitting information generating part 13 selects a new position information identifier (e.g., link data) from the position information identifier database A 11, or selects information of an position information identifier containing a position of or designated by the receiver unit.

Step 12: The position information identifier transmitting information generating part acquires coordinate values (longitude/latitude) of nodes and interpolating points, which constitute the position information identifier, from the digital map database A 12, and generates a coordinate row.

Step 13: The position information identifier transmitting information generating part further acquires supplementary information indicating the attributes of the nodes and the links each between adjacent nodes, from the digital map database A 12. The supplementary information includes information on road type code, road number, the number of connection links at the intersection node, and connection link angles of the connection links and others.

Step 14: When a configuration of an array of interpolating points may be approximated by a function, the array configuration is expressed by the function, whereby the coordinate row data is compressed.

Step 15: When the interpolating points are linearly arrayed, the interpolating points are thinned to compress the coordinate row data.

Step 16: The coordinate value of the first node in the coordinate row is expressed by the absolute coordinate. The coordinate values of the second and subsequent nodes (or interpolating points) are expressed, to compress the data amount, by the relative coordinate in a manner that a difference between the coordinate value of the first node and the coordinate value of the preceding node (or the interpolating point) .

Step 17: Information (link number) of the position information identifier and information of the coordinate row or the supplementary information are formatted into a transmission format.

Step 18: The position information identifier information transmitting part 14 transmits this data.

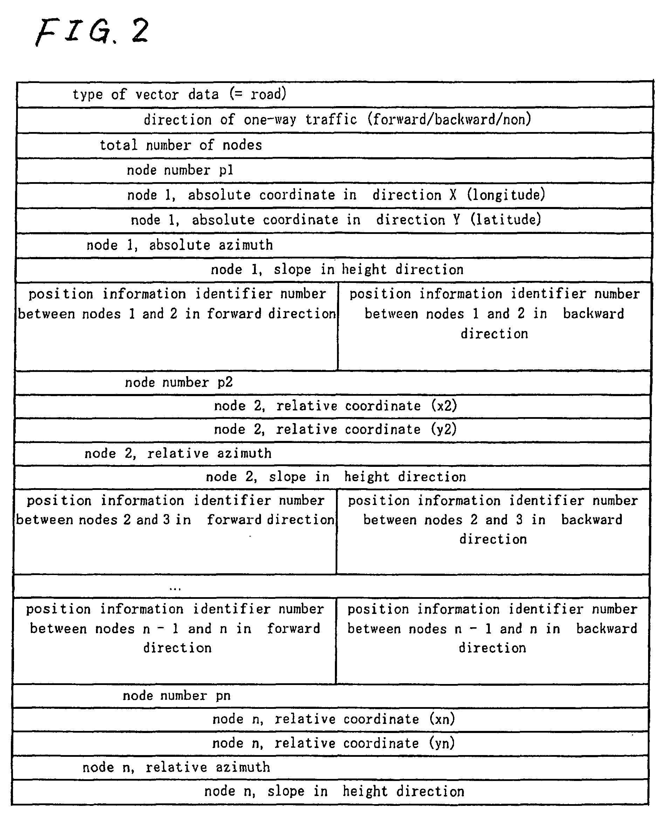

Fig. 2 exemplarily shows a data configuration of the position information identifier information, and the added road information is exemplarily shown.

The receiving side device 30 which has received the position information identifier information and the supplementary information performs following operation.

Step 31: The position information identifier information receiving part 31 receives the data.

Step 32: The information reflection judging part 32 compares the received data with the position information identifiers stored in the position information identifier database B 37, and selects the position information identifier to be updated from the received data, and stores the selected position information identifier into the position information identifier database B 37.

In this case, when the received information is not contained in the position information identifier database, or when the received information is newer than the data stored in the self device, the received position information identifier may be stored in the position information identifier database B 37.

Step 33: The map matching part 33 carries out a map matching process of the data of the coordinate row contained in the position information identifier information to the data of the digital map database B 38 to thereby determine a position of the position information identifier on the digital map. At this time, the map matching part makes a short list of candidate points of the position information identifier positions by referring to the supplementary information , azimuth information of the nodes contained in the position information identifier information, height information and the like.

Step 34: The information reflection judging part 32 associates the previously stored position information identifier with the position on the digital map, which is determined by the map matching part.

In this way, data of the new position information identifier is stored into the position information identifier database B 37.

The traffic information transmitting device 20 provides traffic information in the following procedure.

Step 21: Position where an event, such as traffic congestion or traffic accident, occurs, is entered.

Step 22: A relative distance (relative position) to the event occurring position is computed using a position information identifier (link number) of the road where the event occurs, and the nodes.

Step 23: A format of those pieces of position information is converted to a transmission format.

Step 24: The information transmission formatted is then transmitted in the form of event information.

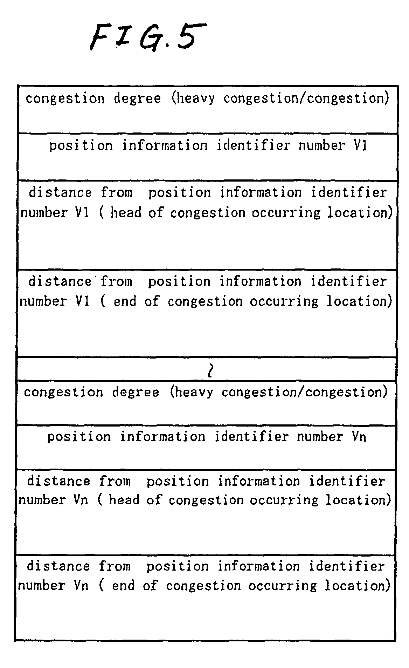

Fig. 4 shows event information presented when a traffic accident occurs, and Fig. 4 shows event information presented at the time of traffic congestion.

The receiving side device 30 that receives the event information operates in the following way.

Step 41: The traffic information receiving parts 34 to 36 receive the event information.

Step 42: The traffic-information generating position computing part 39 specifies a road on the digital map, which contains an event occurring position, by using the position information identifier contained in the event information and the data of the position information identifier database B 37 and the digital map database B 38, and specifies the event occurring position on the road based on a relative position contained in the event information.

Step 43: The event occurring position is visually presented on the map displayed in the digital map display part 40.

Thus, in this system, the position information identifiers stored in the receiving side device are automatically updated according to the information from the position information identifier transmitter 10, and the newest position information identifier is stored in the receiving side device. For this reason, the traffic information transmitting device is able to provide traffic information by using only the newest position information identifier.

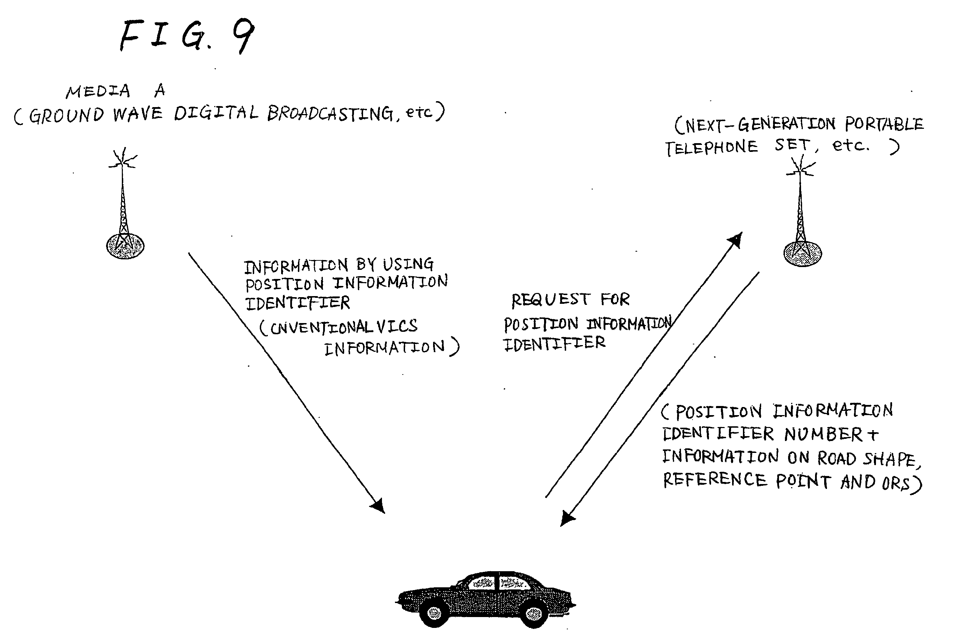

Also in the system, as shown in Fig. 9, the information of the position information identifier may be received from other media than the media providing traffic information, by way of a portable telephone set. In this case, when the position information identifier, which is not found in the self position information identifier database B 37, is contained in the traffic information, the receiving side device requests the position information identifier providing media to send the position information identifier, by way of the portable telephone set. Upon receipt of this, the position information identifier providing media sends the requested position information identifier to the receiving side device.

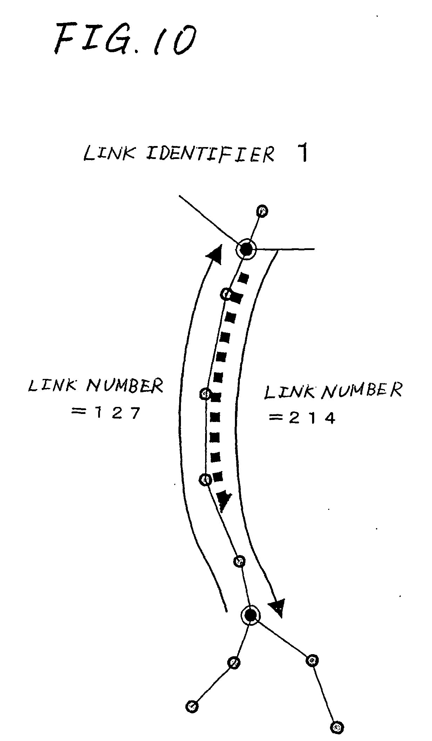

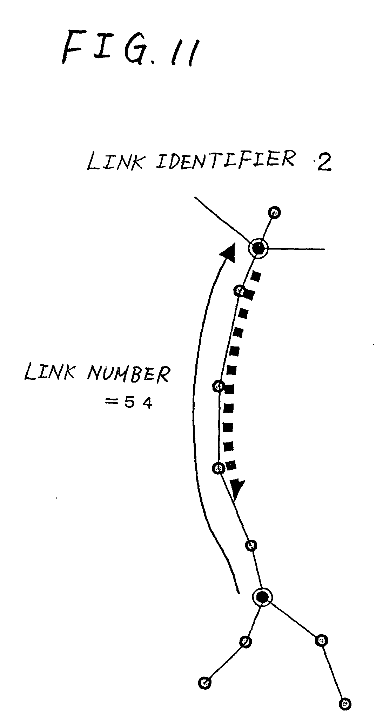

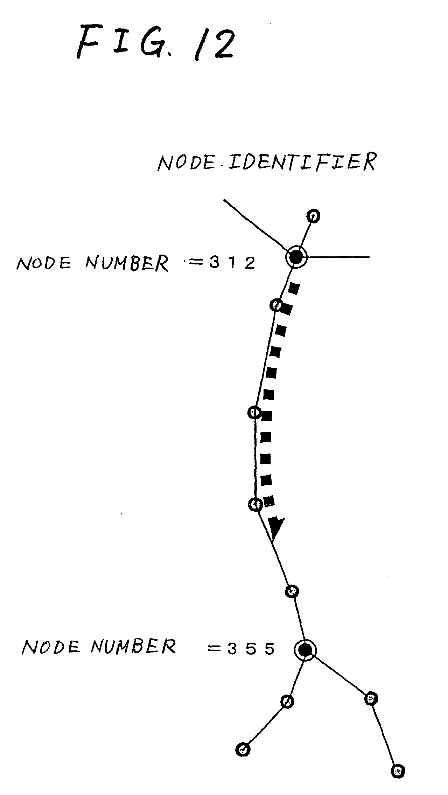

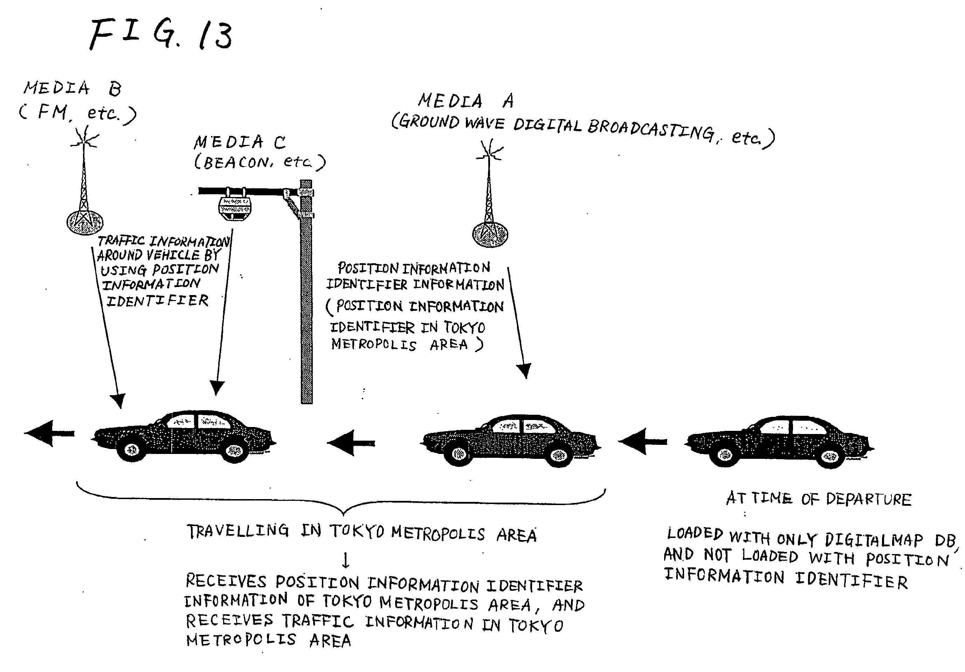

Some examples of the position information identifiers are presented:
(1) "Position information identifier 1" (Fig. 10);
   "Links" each connecting the intersections are numbered every area to advance, and the road interval and direction are expressed by one number assigned to the link. VICS links or the like, currently operated in trunk roads in Japan may be enumerated for this position information identifier.
(2) "Position information identifier 2" (Fig. 11);
   It is defined without using the direction, and the direction is added to dynamic information.
(3) "Node identifier " (Fig. 12);

The intersections per se are numbered, and the road interval is expressed by using two numbers.

How to display the traffic congestion information in Figs. 10 to 12 will be described. When the "position information identifier 1" (Fig. 10) is used, the congestion information is displayed as "position information identifier is 214,and the conjested block is 250m to 450m". When the "position information identifier 2" (Fig. 11) is used for displaying the same information, its display is "the position information identifier is 54, the direction is the reverse direction, and the conjested block is 250m to 450m".

When the same information is displayed by using the "position information identifier " (Fig. 12), the display is "the position information identifier is 312 to 355, and the conjested block is 250m to 450m".

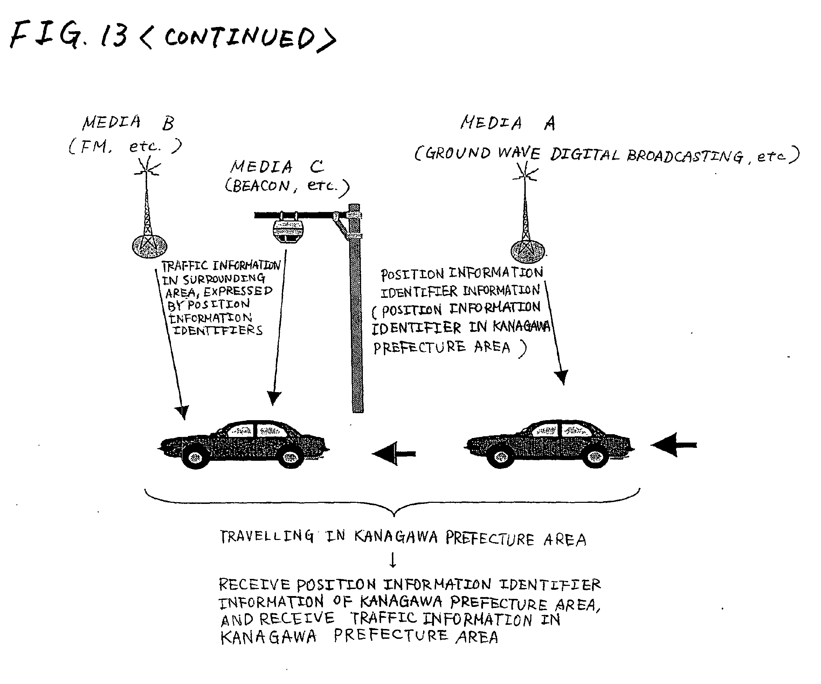

An application other than the transmission of the updated position information identifier in the embodiment system, is shown in Fig. 13.

In this example, at the start, the on-board navigation device contains only the digital map, and it sends, as needed, necessary information to a currently traveling area (further it may be what is obtained by extracting only the links from the information provided). Subsequently, the vehicle carrying the on-board navigation device further travels, and the vehicle's position changes with its traveling. The position information identifier is updated with the changing vehicle's position.

In a specific example, a vehicle which holds only the digital map information at the time of its starting, starts from a location in the Tokyo Metropolitan area, in a state that it is not loaded with the position information identifier. During its traveling in the Tokyo Metropolitan area, the vehicle receives the position information identifiers in the Metropolitan area, and traffic information in the same area. When the vehicle further travels and enters the Kanagawa prefecture area, the vehicle receives the position information identifiers in the Kanagawa prefecture area and traffic information in the same area.

While the present invention has been described in detail and using a specific embodiment, it should be understood that the invention may variously be modified, altered and changed within the true spirits and scope of the invention.

This application is based on Japanese Patent Application (Application No. 2000-375321), filed Dec. 8, 2000, the content of which is incorporated herein by reference.

### <Industrial Applicability>

As seen from the foregoing description, the system of the invention is capable of supplementarily supporting a scheme of providing information by using the position information identifiers, and lightening the burden imposed on the map data manufacturer in order to maintain the scheme of providing information.

Further, there is no need of transmitting the new and old position information identifiers redundantly to the VICS information. Accordingly, the efficiency of the data transmission is improved, and the resultant energy may be used for enriching the information service.

Where the position information identifier transmitting method of the invention is employed, the receiving side device reliably makes the correspondence between the position information identifier and the position on the digital map even if different digital map data is used.

## Claims

1. A position information identifier providing system comprising:
information providing means for providing to a receiving device containing a database of position information identifiers and a database of a digital map, only the information using said position information identifiers; and
position information identifier information providing means for providing only updated position information identifier information to said receiving device, in addition to said information providing means.

2. A position information identifier providing system comprising:
information providing means for providing only the information using position information identifiers to a receiving device containing a database of a digital map; and
position information identifier information providing means for providing only position information identifier information to said receiving device, in addition to said information providing means.

3. A position information identifier providing system comprising:
information providing means for providing to a receiving device containing at least one of a database of position information identifiers and a database of a digital map, only the information using said position information identifiers; and
position information identifier information providing means for providing only updated position information identifier information to said receiving device, in addition to said information providing means.

4. A position information identifier providing system any of claims 1 to 3,
wherein said position information identifier information is information of a position information identifier containing a position of or specified by said receiving device.

5. A position information identifier providing system any of claims 1 to 3,
wherein said information providing means and said position information identifier information providing means provide their information by use of different channels of broadcasting media.

6. A position information identifier providing system any of claims 1 to 5,
wherein one of said information providing means is a beacon.

7. A position information identifier providing system any of claims 1 to 3,
wherein said information providing means and said position information identifier information providing means provide their information by use of different media.

8. A position information identifier providing system any of claims 1 to 7,
wherein said position information identifier information providing means provides said position information identifier information upon receipt of a request by a portable telephone set from said receiving device.

9. Amethod for transmitting information on position information identifier to a receiving device including at least one of a database of position information identifiers and a database of a digital map, said method comprising the steps of:
transmitting information on said position information identifier and coordinate row information to said receiving device; and
executing a map matching process at said receiving device in order to determine a position on said digital map;
wherein said coordinate row information includes nodes and interpolating points, both of which are constituting said position information identifier, and
wherein said determined position on said digital map corresponds to said position information identifier.

10. The method according to claim 9,
wherein, in the step of transmitting, supplementary information is further transmitted to said receiving device together with said coordinate row information, and
wherein, in the step of executing a map matching at said receiving side device, candidate points obtained through the execution of a map matching process are limited by using said supplementary information.

11. A position information identifier transmitter which generates and transmits position information identifier transmitting information including information on a position information identifier and coordinate row information of nodes and interpolating points, both constituting said position information identifier.

12. A receiving device including at least one of a database on a position information identifier and a database on a digital map for receiving information using said position information identifier and displaying a position on a digital map, which corresponds to said position information identifier, said receiving device is **characterized in that**:
coordinate row information of nodes and interpolating points, both constituting said position information identifier, and information on said position information identifier are received at said receiving device,
a map matching process is executed at said receiving device by using said coordinate row information, and thereby,
said position of said position information identifier on a digital map is determined.
